Europäisches Patentamt

European Patent Office

Office européen des brevets

(19)

(11) Numéro de publication: **0 175 911**
**B1**

(12) **FASCICULE DE BREVET EUROPEEN**

(45) Date de publication du fascicule du brevet: **12.12.90**

(21) Numéro de dépôt: **85110246.7**

(22) Date de dépôt: **16.08.85**

(51) Int. Cl.⁵: **G 06 M 1/02, F 16 C 33/20 //**
**G01C5/06**

(54) Compteur mécanique à affichage digital.

(30) Priorité: **26.09.84 CH 4609/84**

(43) Date de publication de la demande:
**02.04.86 Bulletin 86/14**

(45) Mention de la délivrance du brevet:
**12.12.90 Bulletin 90/50**

(84) Etats contractants désignés:
**AT BE CH DE FR GB IT LI LU NL SE**

(56) Documents cités:
**CH-A- 411 409**
**CH-A- 476 831**
**DE-C- 562 236**
**FR-A-1 147 838**
**US-A-3 587 320**
**US-A-3 858 172**

(73) Titulaire: **SARCEM SA**
**27 rue Cardinal-Journet Case Postale 371**
**CH-1217 Meyrin 1 (CH)**

(72) Inventeur: **Bonello, Philippe**
**26, Chemin du Pommier**
**CH-1218 Grand-Saconnex (CH)**

(74) Mandataire: **Micheli, Michel-Pierre et al**
**MICHELI & CIE 118, Rue du Rhône Case Postale**
**47**
**CH-1211 Genève 6 (CH)**

Courier Press, Leamington Spa, England.

## Description

La présente invention a pour objet un compteur mécanique à affichage digital pour l'instrumentation notamment de poste de pilotage. Ces compteurs sont plus particulièrement utilisés comme compteurs mécaniques altimétriques et barométriques à haute performance pour l'aviation civile et militaire.

Pour des raisons de sécurité, les compteurs électroniques pouvant tomber en panne lors d'une interruption de leur alimentation en énergie électrique, il est exigé sur les avions civils et militaires notamment, de disposer de compteurs mécaniques notamment de compteurs altimétriques qui sont entraînés directement par un baromètre ou un appareil mécanique de mesure de la pression barométrique ou altimétrique.

La tendance toujours plus poussée à la miniaturisation nécessite des compteurs mécaniques toujours plus performants, présentant un couple d'entraînement toujours plus faible, et de dimensions toujours plus réduites.

Bien qu'aucun document antérieur relevant de compteurs pour l'aéronautique n'ait été mis en évidence on connaît du brevet CH—A—411409 un compteur-totalisateur à tambours présentant des tambours pivotés sur un axe fixé dans un bâti, chaque tambour étant muni d'une roue dentée d'entrainement et d'un disque d'indexage, le disque d'indexage et la roue dentée d'entraînement de deux tambours voisins coopérant tous deux avec un pignon pivoté sur une pièce du bâti.

On connaît encore du document DE—A—562236 un compteur du même type mais dans lequel chaque tambour est solidaire d'un axe pivoté sur le bâti.

D'autre part on connaît des documents CH—A—476831 et FR—A—1.147.838 des éléments autolubrifiants pour l'horlogerie en matière plastique soit sous forme de masse agglomérée frittée d'une matière thermoplastique additionnée d'un agent de greffage ou de réticulation "bloqué" soit sous forme d'éléments métalliques munis d'une couche de matière autolubrifiante.

La présente invention a pour objet un tel compteur mécanique à très faible couple, miniaturisé, pour instruments deux et trois inches notamment et plus particulièrement pour des applications très particulières, il est impératif de réduire le couple d'entraînement des parties mobiles le plus possible, de garantir un bon fonctionnement dans une gamme de température allant de −60°C à + 80°C, que les caractéristiques de fonctionnement soient indépendantes du degré d'humidité relatives de l'ambiance dans laquelle le dispositif travaille.

Le compteur mécanique selon la présente invention se distingue par les caractéristiques énumérées à la revendication 1.

Le dessin annexé illustre schématiquement et à titre d'exemple une forme d'exécution d'un compteur mécanique altimétrique selon l'invention.

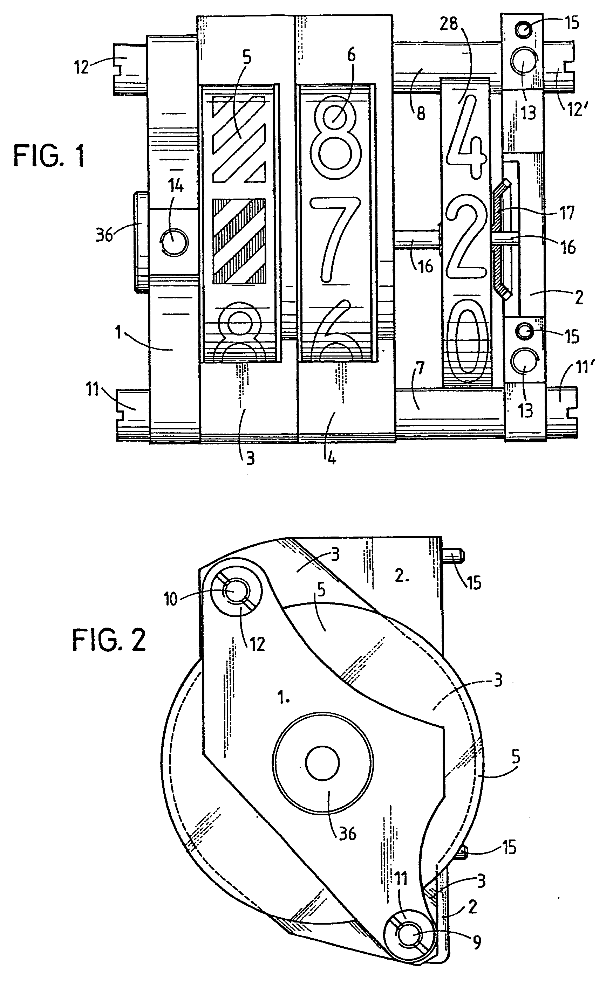

La figure 1 est une vue en élévation de côté du compteur selon l'invention.

La figure 2 est une vue en bout du compteur illustré à la figure 1.

La figure 3 est une vue schématique en coupe de la cinématique d'entraînement de trois tambours chiffrés du compteur illustré aux figures 1 et 2.

La figure 4 est une coupe selon la ligne IV—IV de la figure 3.

La figure 5 illustre en coupe un palier utilisé dans un mécanisme d'entraînement des tambours chiffrés.

La figure 6 illustre en coupe un palier utilisé dans le mécanisme d'entraînement des tambours chiffrés du compteur.

Le compteur illustré comporte un bâti formé de pièces moulées d'extrémités 1, 2; de pièces moulées intermédiaires 3, 4 munies d'ouvertures laissant apparaître une partie de la surface cylindrique externe d'un tambour de dix mille pieds 5 et d'un tambour de mille pieds 6 respectivement; des entretoises tubulaires 7, 8; ces pièces étant empilées les unes contre les autres et serrées ensemble par deux tiges filetées 9, 10 traversant des alésages pratiqués dans ces pièces et coopérant avec des organes de serrage 11, 11' et 12, 12'. Les pièces d'extrémités 1, 2 comportent des organes de fixation constitués par des taraudages 13, 14 et la pièce d'extrémité 2 comporte des organes de positionnement 15 formés par des goupilles permettant de fixer le compteur sur un tableau de bord.

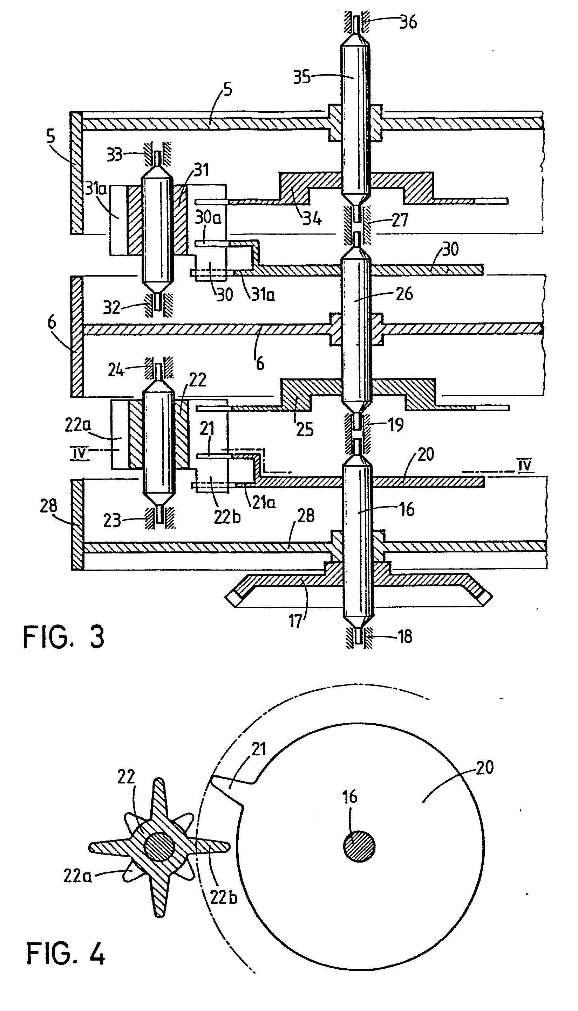

Le mécanisme de ce compteur mécanique miniaturisé, le diamètre de ses tambours étant compris entre 10 et 30 mm de préférence égal à 13 mm, 19 mm ou 25,4 mm, et illustré schématiquement à la figure 3 comporte un axe d'entrée 16 portant la roue dentée 17 d'entraînement du compteur par un dispositif de mesure de la pression barométrique ou altimétrique mécanique provoquant une rotation proportionnée à la valeur des variations de ladite pression d'un pignon de sortie (non illustré) engrenant avec la roue dentée d'entraînement 17.

L'axe 16 est pivoté dans des paliers fixés, l'un 18 dans la pièce d'extrémité 2 et l'autre 19 dans la pièce intermédiaire 4. Cet axe 16 porte un plateau d'indexage 20 comprenant sur sa périphérie une dent 21 coopérant avec la denture d'un pignon 22 pivoté à l'aide de paliers 23, 24 portés par la pièce intermédiaire 4. Cet axe 16 porte également le tambour des cent pieds 28.

Ce pignon 22 est également en prise avec une première roue dentée 25 portée par un axe 26, coaxial à l'axe 16, et pivotée dans le palier 19 et dans un palier 27 fixé dans la pièce intermédiaire 3, portant le tambour des mille pieds 29 effectuant une révolution complète pour dix tours du tambour des cent pieds 28.

Cet axe 26 porte également un plateau d'indexage 30 présentant une dent 30a sur sa périphérie coopérant avec la denture d'un second pignon 31 pivoté dans des paliers 32, 33 fixés dans la pièce intermédiaire 3 et dont la denture entraîne une roue dentée 34 solidaire d'un axe 35 portant le tambour des dix mille pieds 5. Cet axe 35 est pivoté d'une part dans le palier 27 et d'autre part dans un palier 36 fixé sur la pièce d'extrémité 1. Le rapport de démultiplication entre l'axe 26 et l'axe 35 est également de une à dix de sorte que cet axe 35 tourne dix fois plus lentement que l'axe 26.

Ce montage et cette disposition très particuliers permettent de réduire grandement les dimensions du compteur et de satisfaire les exigences de miniaturisation actuelles, les dimensions hors toutes ne dépassant pas 25 mm sur 27 mm par exemple. Il est à remarquer que pratiquement tout le mécanisme d'entraînement des tambours est logé à l'intérieur de ceux-ci.

Le tambour des cent pieds 28 comporte répartis uniformément sur sa périphérie des chiffres de 0 à 9, comme le tambour des mille pieds 6, tandis que le tambour des dix mille pieds comporte des chiffres de 1 à 8 et deux zones hachurées remplaçant les chiffres 0 et 9.

La conception et la disposition de ce mécanisme d'entraînement des tambours 28, 6 et 5 du compteur en permet la miniaturisation, premier objectif que s'était proposée la titulaire; le second objectif visé, la réduction du couple d'entraînement du compteur est atteint par l'utilisation de paliers spéciaux pour ce mécanisme.

En effet, il a été nécessaire de développer de nouveaux paliers car les paliers actuellement utilisés dans ce genre d'applications présentent généralement des surfaces de contact graphitées de sorte que pendant leur stockage avant montage dans les instruments et appareils en question et pendant ce montage des précautions particulières doivent être prises pour éviter que de la poussière ne vienne se coller sur les surfaces de glissement, ce qui altère les conditions de fonctionnement. En outre, le graphite est sensible au degré d'humidité de sorte que les caractéristiques, notamment le couple d'entraînement des appareils ainsi équipés varient en fonction de l'humidité ambiante.

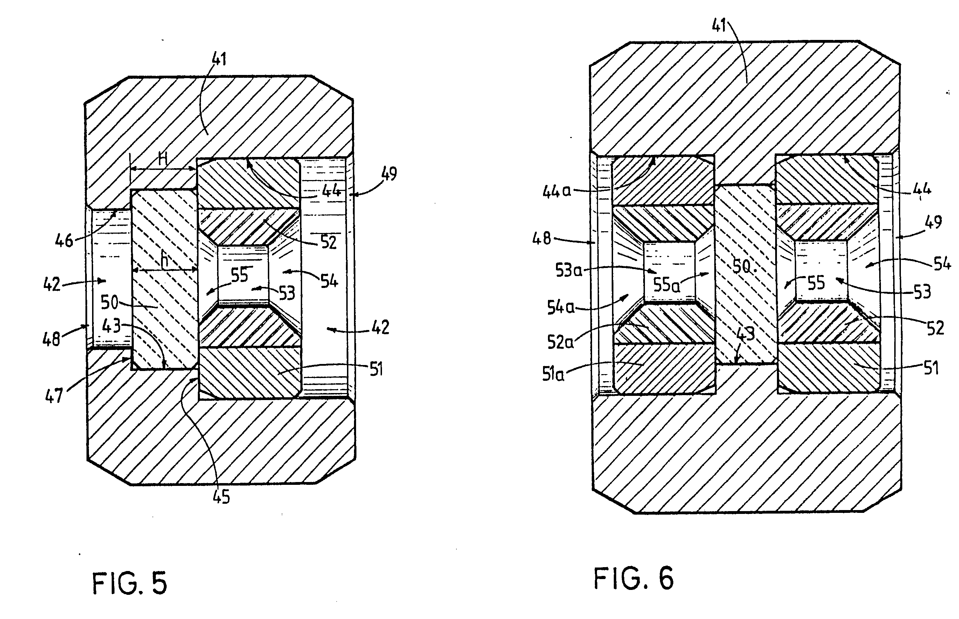

Les paliers 18, 23, 24, 32, 33 et 36 du mécanisme d'entraînement des tambours du compteur sont chacun constitués par un palier autolubrifiant illustré à très grande échelle à la figure 5 qui présente en grandeur nature un diamètre extérieur de l'ordre de 1 à 3 mm et une épaisseur de l'ordre de 0,6 à 1,8 mm, c'est-à-dire qu'il s'agit de paliers de très petites dimensions.

Ce palier est insensible au vieillissement, à l'humidité aux variations de température dans une plage de −60°C à + 80°C et ne nécessite aucune maintenance, lubrification, nettoyage ou autre.

Pour obtenir un tel résultat, la matière utilisée pour la réalisation des différentes pièces du palier est évidemment importante, mais il convient également de réaliser une combinaison de pièces et de déterminer la forme de chacune de celles-ci pour que les caractéristiques du palier réalisé soient optimales.

Le palier illustré à la figure 5 comporte un corps 41 de forme générale cylindrique, dont les arêtes ont été chanfreinées pour faciliter son montage dans un appareil ou instrument qui s'effectue généralement par chassage dans un perçage calibré.

Ce corps 41 présente un passage central traversant 42 présentant une première surface cylindrique 43 et une seconde surface cylindrique 44, de plus grand diamètre définissant ainsi un épaulement 45. Une troisième surface cylindrique 46, de plus faible diamètre que la première 43 définit un second épaulement 47. Les extrémités du passage central débouchant sur les faces frontales du corps 41 sont chanfreinées en 48 respectivement 49.

Un disque en ruby 50, synthétique ou naturel, présente un diamètre correspondant à celui de la première surface cylindrique 43 afin d'être fixé dans le corps 41 par chassage ou à frottement gras dans cette surface cylindrique 43. L'épaisseur h de ce disque 50 est égale à la hauteur H de ladite surface cylindrique 43 de sorte que lorsque le disque en ruby 50 est en position de service, en appui contre l'épaulement 47, son autre face soit située dans le plan de l'épaulement 45. Les arêtes circulaires du disque 50 sont chanfreinées pour faciliter son introduction dans le corps 41.

Il est évident que ce disque en ruby 50 pourrait dans des variantes être réalisé dans une autre pierre synthétique ou naturelle généralement utilisée pour des paliers industriels.

Ce disque 50 en pierre dure est maintenu en position de service illustré par une bague en acier 51 sertie, frettée ou chassée à force dans la seconde surface cylindrique 44 du corps 41, qui vient en appui contre l'épaulement 45 et qui donc entre en contact avec la face frontale du disque 50. Les arêtes circulaires externes de cette bague 51 sont chanfreinées toujours pour faciliter son introduction dans le corps 41.

Cette bague en acier 51 renferme une pièce 52 en résine synthétique dénommée "Hostaforme", fabriquée par la Maison HOEGST AKTIENGESELLSCHAFT, FRANKFURT A/MAIN-HÖGST, dont elle est rendue solidaire par tous moyens, chassage, frettage, collage, etc. L'épaisseur de cette pièce 52 est égale à celle de la bague, elle présente un alésage central 53 d'un diamètre correspondant à celui d'un pivot devant coopérer avec ce palier. Cet alésage 53 est prolongé de part et d'autre par des surfaces coniques 54, 55 allant en s'évasant en direction des faces frontales de la pièce 52. L'évidement de cette pièce 52 présente donc en coupe axiale la forme générale d'un diabolo.

Cette résine synthétique "Hostaforme" est autolubrifiante et ne nécessite aucun graphitage ou autre lubrification externe.

Les essais avec ce type de paliers ont prouvé qu'ils étaient d'un montage très simple, ne nécessitant aucune opération de lubrification, qu'ils ne demandent aucune maintenance, qu'ils répondent aux conditions de fonctionnement exigées et énumerées plus haut et que le couple d'entraînement est diminué d'environ 50% par rapport à un palier usuel et que de surcroît ce couple diminue après un certain temps d'utilisation sans introduire de jeu ou autre conséquence néfaste. Ce palier présente donc des caractéristiques mécaniques s'améliorant en fonction de sa durée d'utilisation.

Les paliers 19 et 27 du mécanisme d'entraînement des tambours du compteur sont ceux constitués par un palier double illustré à la figure 6 se différenciant de celui illustré à la figure 5 en ce que l'épaulement 47 contre lequel le disque 50 s'appuie, est remplacé par une seconde bague 51a chassée dans une surface cylindrique 44a que présente le corps 41a et renfermant une pièce 52a. Ainsi, le même disque en pierre dure 50 est utilisé comme butée pour des paliers en lignes coopérant avec deux pivots distincts coaxiaux. Les autres éléments de ce palier sont les mêmes que ceux décrits en référence à la figure 5.

Des essais pratiques ont montré que sur des compteurs de deux et trois inches de trois tambours le couple d'entraînement tant statistique que dynamique avait grâce à cette nouvelle conception d'ensemble et grâce à ces nouveaux paliers été réduit d'au moins 40% par rapport aux compteurs existants.

Il est évident que dans d'autres exécutions du mécanisme d'entraînement des tambours, celui-ci pourrait comporter des moyens de verrouillage des tambours dans leur position angulaire en dehors de leur temps d'entraînement, sauf bien entendu le premier tambour 28 des cent pieds qui est continuellement entraîné et accouplé mécaniquement aux systèmes barométriques moteurs.

Ainsi, les pignons 22 et 31 peuvent comporter, comme illustré, alternativement des dents normales 22a, 31a et des dents prolongées 22b, 31b. Les dents prolongées 22b et 31b sont destinées à coopérer avec une denture 21a, 30b respectivement portées par les plateaux d'indexage 20, 30 qui sont telles qu'elles ne provoquent pas l'entraînement des pignons 22, 31 lorsqu'ils sont entraînés en rotation, par contre verrouillent lesdits pignons dans leur position angulaire lorsque les plateaux d'indexage sont soit à l'arrêt soit en rotation mais que leurs dents coniques 21, 30a n'entraînent pas les pignons 22, 31.

Dans une variante non illustrée, le tambour 28 des cent pieds pourrait être disposé immédiatement à côté du tambour 6 des milles pieds réduisant ainsi encore la longueur du compteur. Dans une telle exécution, ce tambour des cent pieds pourrait également être logé dans une pièce intermédiaire, comme les deux autres tambours qui remplacerait les entretoises 7, 8. Le tambour des cent pieds peut être plus large et comporter des indications de centaines de pieds 100, 200 ... 900. Le nombre des tambours peut être différent et dépend de ce que l'on veut afficher. En outre, le rapport de démultiplication du mécanisme d'entraînement des tambours peut être différent et dépend du système, métrique ou autre, utilisé.

Enfin, les différentes pièces du bâti, du mécanisme ainsi que les tambours peuvent être réalisés en métal ou en matière plastique.

Grâce à sa nouvelle conception, le compteur mécanique notamment altimétrique ou barométrique selon les indications portées par les tambours, présente les principaux avantages suivants:

a. Il possède un encombrement très réduit qui permet de l'intégrer facilement dans un tableau de bord d'un avion particulièrement.

b. Son couple d'entraînement est réduit d'au moins 40% par rapport aux compteurs existants. De cette façon, le moteur barométrique l'entraînant peut disposer d'un couple moteur plus faible et être donc de dimensions réduites.

c. L'utilisation des nouveaux paliers évite toute intervention avant montage, et permet un stockage de longue durée sans inconvénient ni perte de performance des compteurs.

d. Les performances des compteurs ne se dégradent pas avec le temps au contraire le couple résistant des paliers diminue en fonction de leur utilisation.

e. Les compteurs ainsi conçus sont particulièrement fiables et performants et peuvent être utilisés dans une large plage de températures ambiantes.

## Revendications

1. Compteur mécanique digital comportant au moins deux tambours (5, 6, 28) rotatifs d'affichage coaxiaux entraînés à des vitesses de rotation différentes pivotés sur un bâti (1, 2, 3, 4, 11, 12), chaque tambour (5, 6, 28) étant porté par un axe (35, 26, 16) pivoté sur le bâti et l'axe (16) portant le tambour dont la vitesse de rotation est la plus grande étant solidaire d'une roue dentée (17) d'entrée, cet axe (16) portant également un disque d'indexage (20) coopérant avec un pignon (22) pivoté sur le bâti et dont la denture engrène avec une roue d'entraînement (25) solidaire de l'axe (26) portant le tambour adjacent (6), caractérisé par le fait que chaque axe (16, 26, 35) portant un tambour (28, 6, 5) est pivoté sur le bâti (1, 2, 3, 4, 11, 12) à l'aide d'un palier (18, 19, 27, 36) autolubrifiant comportant un corps (41) muni d'un passage central traversant présentant une première surface cylindrique dans laquelle est chassé un disque (50) en pierre dure naturelle ou synthétique et une seconde surface cylindrique, de plus grand diamètre que la première, dans laquelle est chassée une bague (51, 51a) munie d'un perçage central d'un diamètre plus faible que celui de la première surface cylindrique et dont l'une des faces annulaires est en contact avec une des faces du disques (50) en pierre dure, et comportant une pièce cylindrique en résine synthétique (52, 52a) fixée dans la bague d'acier (51, 51a), cette pièce présentant une surface cylindrique interne médiane (53, 53a) destinée à recevoir un pivot dudit axe (35, 26, 16) et deux surfaces coniques allant en s'évasant depuis cette surface cylindrique médiane (53, 53a) jusqu'aux surfaces frontales de cette pièce (52, 52a) définissant ainsi un vide central présentant en coupe longitudinale la forme générale d'un diabolo; la face frontale interne de la pièce en résine synthétique (52, 52a) étant en contact avec la face du disque en pierre (50) dure qui est en contact avec la bague; et par le fait que chaque pignon (22, 31) est pivoté sur le bâti à l'aide d'un palier autolubrifiant (23, 24, 32, 33) comportant un corps (41) muni d'un passage central traversant présentant une première surface cylindrique dans laquelle est chassé un disque (50) en pierre dure naturelle ou synthétique et une seconde surface cylindrique, de plus grand diamètre que la première, dans laquelle est chassée une bague (51) munie d'un perçage central d'un diamètre plus faible que celui de la première surface cylindrique et dont l'une des faces annulaires est en contact avec une des faces du disque (50) en pierre dure et comportant une pièce cylindrique en résine synthétique (52) fixée dans la bague d'acier (51), cette pièce (52) présentant une surface cylindrique interne médiane (53) destinée à recevoir un pivot dudit axe et deux surfaces coniques allant en s'évasant depuis cette surface cylindrique médiane (53) jusqu'aux surfaces frontales de cette pièce (52) définissant ainsi un vide central présentant en coupe longitudinale la forme générale d'un diabolo; la face frontale interne de la pièce en résine synthétique (52) étant en contact avec la face du disque (50) en pierre dure qui est en contact avec la bague (51).

2. Compteur selon la revendication 1, caractérisé par le fait que les extrémités se faisant face de deux axes (16, 26, 36) adjacents sont pivotées dans un palier double (19, 27) dont l'épaisseur du disque en pierre dure (50) est égale à la hauteur de la première surface cylindrique, l'autre face frontale de ce disque (50) étant en appui contre la face d'une seconde bague (51a) chassée dans une autre surface cylindrique du corps (41) et renfermant une pièce (52a) identique à celle (52) contenue dans la première bague (51).

3. Compteur selon l'une des revendications 1 ou 2, caractérisé par le fait que le disque en pierre dure (50) est en ruby naturel ou synthétique.

4. Compteur selon l'une des revendication précédentes, caractérisé par le fait que la pièce en matiere synthetique (52) contenue dans la bague (51) est en "Hostaforme".

5. Compteur selon l'une des revendications précédente, caractérisé par le fait que la ou les bagues (51, 51a) sont en acier et que le corps (41) est en laiton.

6. Compteur selon l'une des revendications précédentes caractérisé par le fait que la roue dentée (17) d'entrée est destinée à être en prise avec un pignon porté par l'axe de sortie d'un moteur barométrique.

7. Compteur selon la revendication 6, caractérisé par le fait que le rapport de démultiplication de la liaison cinématique reliant le premier axe (16) au second (26) est de 1 à 10.

8. Compteur selon la revendication 6, caractérisé par le fait que le second axe (26) portant le second tambour (6) est solidaire d'un disque d'indexage (30) coopérant avec un second pignon (31) dont la denture est en prise avec une roue d'entraînement (34) solidaire d'un troisième axe (35) portant un troisième tambour (5).

9. Compteur selon la revendication 8, caractérisé par le fait que le rapport de démultiplication de la liaison cinématique reliant le second axe (26) au troisième axe (35) est de 1 à 10.

10. Compteur selon l'une des revendications précédentes, caractérisé par le fait qu'un dispositif de verrouillage (21a, 22b; 31a, 30) bloque la position angulaire d'un pignon sauf pendant son indexage.

11. Compteur selon l'une des revendications précédentes, caractérisé par le fait que le bâti comporte des pièces d'extrémités (1, 2) entre lesquelles sont empilées des pièces intermédiaires (3, 4) comportant une ouverture laissant apercevoir une partie de la périphérie de certains tambours (5, 6, 28) au moins et/ou des entretoises (7), l'empilage étant maintenu à l'aide d'organes de serrage traversants (11, 12).

12. Compteur selon la revendication 11, caractérisé par le fait que le mécanisme d'entraînement des tambours (5, 6, 28) est situé entièrement à l'intérieur d'une surface cylindrique coaxiale aux tambours mais d'un diamètre inférieur à ceux-ci et au moins partiellement à l'intérieur desdits tambours.

**Patentansprüche**

1. Mechanischer digitaler Zähler umfassend wenigstens zwei koaxiale drehbare Anzeigewalzen (5, 6, 28), die mit verschiedenen Umdrehungsgeschwindigkeiten angetrieben und auf einem Rahmen (1, 2, 3, 4, 11, 12) verschwenkbar sind, wobei jede Walze (5, 6, 28) von einer Achse (35, 26, 16) getragen wird, die schwenkbar am Rahmen gelagert ist und die Achse (16), die die Walze mit der größten Umdrehungsgeschwindigkeit trägt, fest mit einem Eingangs- bzw. Einlaßzahnrad (17) verbunden ist, wobei diese Achse (16) auch eine Indexierungsscheibe (20) trägt, die mit einem Ritzel (22) zusammenwirkt, das schwenkbar am Rahmen befestigt ist und dessen Verzahnung in ein Antiebszahnrad (25) eingreift, das fest mit der die angrenzende Walze (6) tragenden Achse (26) verbunden ist, dadurch gekennzeichnet, daß jede eine Walze (28, 6, 5) tragende Achse (16, 26, 35) schwenkbar am Rahmen (1, 2, 3, 4, 11, 12) mittels eines selbstschmierenden Lagers (18, 19, 27, 36) befestigt ist, das einen Körper (41) umfaßt, der von einem zentralen Durchlaß durchsetzt ist, der eine erste zylindrische Fläche bildet, in die eine Scheibe (50) aus hartem Natur- oder Kunststein eingetrieben ist und eine zweite zylindrische Fläche von größerem Durchmesser als die erste bildet, in die ein Ring (51, 51a) eingetrieben ist, der mit einem zentralen Durchstich von geringerem Durchmesser als der Durchmesser der ersten zylindrischen Fläche versehen ist und dessen eine ringförmige Fläche in Berührung mit einer der Flächen der Hartsteinscheibe (50) steht, und einen zylindrischen Teil (52, 52a) aus synthetischem Harz umfaßt, der im Stahlring (51, 51a) befestigt ist, wobei dieser Teil eine zylindrische innere Mittelfläche (53, 53a) aufweist, die dazu bestimmt ist, einen Drehzapfen der genannten Achse (35, 26, 16) aufzunehmen und zwei konische Flächen sich von dieser zylindrischen Mittelfläche (53, 53a) aus erweiternd bis zu den Stirnflächen dieses Teils (52, 52a) erstrecken und damit einen zentralen Hohlraum begrenzen, der im Längsschnitt die allgemeine Form eines Diabolo aufweist; die innere Stirnfläche des Teils (52, 52a) ans synthetischem Harz in Berührung mit der Fläche der Hartsteinsscheibe (50) steht, die in Berührung mit dem Ring steht; und daß jedes Ritzel (22, 31) auf dem Rahmen mittels eines selbstschmierenden Lagers (23, 24, 32, 33) schwenkbar befestigt ist, das einen Körper (41) aufweist, der von einem zentralen Durchlaß durchsetzt ist, der eine erste zylindrische Fläche aufweist, in die eine Scheibe (50) aus hartem Natur- oder Kunststein eingetrieben ist und eine zweite zylindrische Fläche von größerem Durchmesser als die erste Fläche besitzt, in die ein Ring (51) eingetrieben ist, der mit einem zentralen Durchstich versehen ist, dessen Durchmesser geringer ist als jener der ersten zylindrischen Fläche und dessen eine ringförmige Fläche in Berührung mit einer der Flächen der Scheibe (50) aus Hartstein steht und der einen zylindrischen Teil (52) aus synthetischem Harz umfaßt, der im Stahlring (51) befestigt ist, wobei dieser Teil (52) eine innere zylindrische Mittelfläche (53) aufweist, die dazu bestimmt ist, einen Drehzapfen der genannten Achse aufzunehmen und zwei konische Flächen sich erweiternd von dieser zylindrischen Mittelfläche (53) aus bis zu den Stirnflächen dieses Teils (52) erstrecken, sodaß sie einen zentralen Hohlraum begrenzen, der im Längsschnitt die allgemeine Form eines Diabolo aufweist; und die innere Stirnfläche des Teils (52) aus synthetischem Harz in Berührung mit der Fläche der Hartsteinscheibe (50) steht, die in Berührung mit dem Ring (51) steht.

2. Zähler nach Anspruch 1, dadurch gekennzeichnet, daß die einander zugewandten Enden von zwei benachbarten Achsen (16, 26, 36) schwenkbar in einem Doppellager (19, 27) befestigt sind, dessen Dicke der Scheibe (50) aus Hartstein gleich der Höhe der ersten zylindrischen Fläche ist, während die andere Stirnfläche dieser Scheibe (50) gegen die Fläche eines zweiten Ringes (51a) abgestützt ist, der in eine andere zylindrische Fläche des Körpers (41) eingetrieben ist und einen Teil (52a) umschließt, der identisch mit dem Teil (52) ist, der im ersten Ring (51) enthalten ist.

3. Zähler nach einem der Ansprüche 1 oder 2, dadurch gekennzeichnet, daß die Hartsteinscheibe (50) aus natürlichem oder synthetischem Rubin besteht.

4. Zähler nach einem der vorhergehenden Ansprüche, dadurch gekennzeichnet, daß der im Ring (51) enthaltene synthetische Teil (52) aus einem Material der Marke Hostaforme besteht.

5. Zähler nach einem der vorhergehenden Ansprüche, dadurch gekennzeichnet, daß der Ring bzw. die Ringe (51, 51a) aus Stahl besteht bzw. bestehen und der Körper (41) aus Messing besteht.

6. Zähler nach einem der vorhergehenden Ansprüche, dadurch gekennzeichnet, daß das Eingangs- bzw. Einlaßzahnrad (17) dazu bestimmt ist, in Eingriff mit einem Ritzel zu stehen, das von der Abtriebwelle eines barometrischen Motors getragen wird.

7. Zähler nach Anspruch 6, dadurch gekennzeichnet, daß das Untersetzungsverhältnis der kinematischen Verbindung, die die erste Achse (16) mit der zweiten Achse (26) verbindet, 1:10 beträgt.

8. Zähler nach Anspruch 6, dadurch gekennzeichnet, daß die zweite Achse (26), die die zweite Walze (6) trägt, fest mit einer Indexierungsscheibe (30) verbunden ist, die mit einem zweiten Ritzel (31) zusammenwirkt, dessen Verzahnung in Eingriff mit einem Antriebsrad (34) steht, das fest mit einer dritten Achse (35) verbunden ist, die eine dritte Walze (5) trägt.

9. Zähler nach Anspruch 8, dadurch gekennzeichnet, daß das Untersetzungsverhältnis der kinematischen Verbindung, die die zweite Achse (26) mit der dritten Achse (35) verbindet, 1:10 ist.

10. Zähler nach einem der vorhergehenden Ansprüche, dadurch gekennzeichnet, daß eine Verriegelungsvorrichtung (21a, 22b; 31a, 30) die Winkelstellung eines Ritzels ausgenommen während seiner Indexierung blockiert.

11. Zähler nach einem der vorhergehenden Ansprüche, dadurch gekennzeichnet, daß der Rahmen Endteile (1, 2) aufweist, zwischen denen Zwischenstücke (3, 4) aufgestapelt sind, die eine Öffnung aufweisen, die wenigstens einen Teil des Umfangs von bestimmten Walzen (5, 6, 28) und/oder der Zwischenträger bzw. der Querverbindungen (7) sichtbar macht, wobei der Stapel von durchsetzenden Spannorganen (11, 12) gehalten wird.

12. Zähler nach Anspruch 11, dadurch gekennzeichnet, daß der Antriebsmechanismus der Walzen (5, 6, 28) vollständig im Inneren einer zu den Walzen koaxialen zylindrischen Fläche, deren Durchmesser jedoch geringer ist als jener der Walzen, und wenigstens teilweise im Inneren der genannten Walzen gelegen ist.

**Claims**

1. Digital mechanical counter comprising at least two rotating display drums (5, 6, 28) which are coaxial and driven at different rotation speeds pivoted on a frame (1, 2, 3, 4, 11, 12), each drum (5, 6, 28) being carried by a shaft (35, 26, 16) pivoted on the frame and the shaft (16) carrying the drum the speed of rotation of which is the highest being fast with an input toothed wheel (17), this shaft (16) carrying also an indexing disc (20) cooperating with a pinion (22) pivoted on the frame and the toothing of which meshes with a driving wheel (25) fast with the axis (26) carrying the adjacent drum (6), characterized by the fact that each shaft (16, 26, 35) carries a drum (28, 6, 5) is pivoted on the frame (1, 2, 3, 4, 11, 12) by means of a bearing (18, 19, 27, 36) which is autolubricating comprising a body (41) provided with a central traversing passage having a first cylindrical surface in which a disc (50) in hard stone natural or synthetical is driven and a second cylindrical surface, of greater diameter than the first one, in which a ring (50, 51a) is driven provided with a central hole of a diameter less than the one of the first cylindrical surface and one of the annular faces of which is in contact with one of the faces of the disc (50) in hard stone, and comprising a cylinder in synthetical resin (52, 52a) fixed in the steel ring (51, 51a), this part presenting a median internal cylindrical surface (53, 53a) intended to receive the pivot of the said axis (35, 26, 16) and two conical surfaces spreading apart from this cylindrical median surface (53, 53a) up to the frontal surfaces of this part (52, 52a) defining thus a central void presenting in longitudinal cross-section the general shape of a diabolo; the frontal internal face of the part in synthetical resin (52, 52a) being in contact with the face of the hard stone disc (50) which is contact with the ring; and by the fact that each pinion (22, 31) is pivoted on the frame by means of an autolubrificating bearing (23, 24, 32, 33) comprising a body (41) provided with a central through passage presenting a first cylindrical surface in which a natural or synthetical hard stone disc (50) is driven and its second cylindrical surface of greater diameter than the first one, in which a ring (51) is driven which is provided with a central passage of a diameter less than the one of the first cylindrical surface and one of the annular faces of which is in contact with one of the faces of the disc (50) in hard stone and comprising a cylindrical part made in synthetic resin (52) fastened in the steel ring (51), this part (52) presenting a median internal cylindrical surface (53) intended to receive a pivot of the said axis and two conical surfaces spreading apart from said cylindrical median surface (53) up to the frontal surfaces of this part (52) defining thus a central void presenting in longitudinal cross-section the general shape of a diabolo; this frontal internal face of the part in synthetical resin (52) being in contact with the face of the hard stone disc (50) which is in contact with the ring (51).

2. Counter according to claim 1, characterized by the fact the ends in front one another of two axis (16, 26, 36) which are adjacent are pivoted in a double bearing (19, 27) the thickness of the hard stone disc (50) is equal to the heigth of the first cylindrical surface, the other frontal face of this disc (50) resting against the face of a second ring (51a) driven in another cylindrical surface of the body (41) and housing a part (52a) identical to the part (52) which is contained in the first ring (51).

3. Counter according to one of the claims 1 or 2, characterized by the fact that the hard stone disc is in natural or synthetical ruby.

4. Counter according to one of the preceding claims, characterized by the fact that the part in synthetical material (52) contained in the ring (51) is in "Hostaforme".

5. Counter according to one of the preceding claims, characterized by the fact that the ring or the rings (51, 51a) are in steel and that the body (41) is in brass.

6. Counter according to one of the preceeding claims, characterized by the fact that the toothed input wheel (17) is intended to mesh with a pinion carried by the output shaft of a barometric motor.

7. Counter according to claim 6, characterized by the fact that the demultiplication ratio of the cinematical linkage connecting the first shaft (16) to the second (26) is of one to ten.

8. Counter according to claim 6, characterized by the fact that the second shaft (26) carrying the second drum (6) is fast with an indexing disc (30) cooperating with a second pinion (31) the toothing of which is in mesh with a driving wheel (34) fast with a third shaft (35) carrying a third drum (5).

9. Counter according to claim 8, characterized by the fact that the demultiplication ratio of the cinematical linkage connecting the second shaft (26) to the third shaft (35) is of one to ten.

10. Counter according to one of the preceding claims, characterized by the fact that a locking device (21a, 22b, 31a, 30) locks the angular position of a pinion but during its indexing.

11. Counter according to one of the preceding claims, characterized by the fact that the frame comprises end parts (1, 2) between which are piled intermediate parts (3, 4) comprising an opening through which appears a portion of the periphery of certain drums (5, 6, 28) at least and/or of the distancers (7), the piling being maintained by means of traversing tightening means (11, 12).

12. Counter according to claim 11, characterized by the fact that the driving mechanism of the drums (5, 6, 28) is entirely located within a cylindrical surface coaxial to the drums but of a diameter less than said drums and at least partially inside said drums.

FIG. 1

FIG. 2

FIG. 3

FIG. 4

EP 0 175 911 B1

FIG. 5

FIG. 6